# DEMANDE DE BREVET EUROPEEN

(11) **EP 1 536 606 A1**
(43) Date de publication de la demande: **01.06.2005**
(21) Numéro de dépôt: 03104412.6
(22) Date de dépôt: 27.11.2003
(51) Int. Cl.: H04L 29/06

(54) **Méthode d'authentification d'applications**

(71) Demandeur: Nagracard S.A., 1033 Cheseaux-sur-Lausanne (CH); Swisscom Mobile AG, 3050 Bern (CH)
(72) Inventeur: Ksontini, Rached, 1004 Lausanne (CH); Cantini, Renato, 1782 Belfaux (CH)
(74) Mandataire: Wenger, Joel-Théophile

(57) **Abrégé**

Le but de la présente invention est de proposer une méthode d'authentification d'applications tant lors de leur téléchargement que lors de leur exécution.

Ce but est atteint par une méthode d'authentification d'au moins une application (APP) fonctionnant dans un appareil connecté par un réseau (NET) à un serveur de contrôle (CSE), cet appareil étant localement connecté à un module de sécurité (SIM), ladite application (APP) est chargée et/ou exécutée au moyen d'un environnement d'exécution d'applications (AEE) de l'appareil et utilise des ressources (RES) stockées dans le module de sécurité (SIM), cette méthode est caractérisée en ce qu'elle comprend les étapes suivantes:
- identification de l'appareil et du module de sécurité (SIM) par le serveur de contrôle (CSE) en vue du chargement et/ou de l'exécution d'une application (APP),
- analyse et vérification par le serveur de contrôle (CSE) desdites données,
- préparation d'un cryptogramme (CRY) comprenant l'identification du module de sécurité (SIM) et une empreinte de l'application (APP),
- transmission dudit cryptogramme (CRY), via le réseau et l'appareil, par le serveur de contrôle (CSE) vers le module de sécurité (SIM),
- extraction de l'empreinte (FIN1), incluse dans le cryptogramme (CRY) par le module de sécurité (SIM),
- lors de l'initialisation d'une application (APP), détermination de l'empreinte (FIN2) de ladite application (APP) et comparaison de cette empreinte (FIN2) avec l'empreinte (FIN1) stockée dans le module de sécurité (SIM),
- libération, respectivement blocage, de l'accès à certaines ressources (RES) du module de sécurité (SIM) en fonction du résultat de la vérification propre à cette application (APP).

## Description

La présente invention concerne le domaine de la téléphonie mobile appelée aussi téléphonie cellulaire. Elle concerne plus particulièrement l'authentification d'applications fonctionnant sur un appareil portable connecté à un module de sécurité associé à un équipement mobile de téléphonie mobile.

Le module de sécurité d'un téléphone mobile ou portable est connu sous l'appellation "carte SIM" (Subscriber Identification Module) constituant l'élément central de la sécurité de ces téléphones. L'opérateur de téléphonie introduit, à la fabrication et/ou lors d'une phase de personnalisation, un numéro appelé IMSI (International Mobile Subscriber Identity) servant à identifier d'une manière sûre et unique chaque abonné désirant se connecter sur un réseau mobile. De plus, chaque téléphone mobile, appelé équipement mobile ci-après, est identifié par un numéro unique stocké dans une mémoire non volatile de l'équipement mobile. Ce numéro, appelé IMEI, (International Mobile Equipment Identity) sert à identifier un équipement mobile donné sur un réseau du type GSM (Global System for Mobile communications), GPRS (General Packet radio Service) ou UMTS (Universal Mobile Télécommunication System). Le même concept d'identification s'applique également au WLAN (Wireless LAN) ou au câble TV bidirectionnel. L'identifiant peut être une adresse MAC (Media Access Control) qui correspond à l'adresse unique identifiant la configuration du matériel d'un utilisateur connecté à un réseau.

Les normes ETSI ("European Telecommunications Standards Institute"), définissent une station mobile (MS, mobile station) composée d'un équipement mobile (ME, mobile equipment) et d'un module d'abonné (SIM, subscriber identity module). Ce module d'abonné est en général amovible c'est-à-dire qu'il peut être soit retiré soit transféré d'un équipement mobile à un autre.

Lors de la mise en service d'un équipement mobile, plus particulièrement lors de sa connexion au réseau d'un opérateur, des informations comprenant les données d'identification sont échangées entre l'équipement mobile et le centre de gestion de l'opérateur qui autorise ou non son utilisation. Actuellement un équipement mobile offre à un abonné, en plus de sa fonction usuelle d'établissement de conversations téléphoniques, l'utilisation de nombreux autres services supplémentaires tels que la consultation de diverses informations, les opérations bancaires à distance, le commerce électronique, etc. Ces services évolués nécessitent un niveau de sécurité de plus en plus élevé afin de prémunir les utilisateurs contre les fraudes éventuelles causées par des tiers.

La vérification de conformité ou authentification devient donc nécessaire au moins à deux niveaux: d'une part au niveau de l'équipement mobile lui-même et d'autre part à celui des applications logicielles permettant le fonctionnement des différents services proposés par l'opérateur ou par des partenaires autorisés. Ces applications sont en général téléchargées depuis le serveur d'un fournisseur d'applications, ce qui implique la nécessité de vérifier ce téléchargement. Il s'agit donc de garantir que le module d'abonné ne fournit des informations qu'à des applications autorisées une fois que ce module a été reconnu par le serveur de contrôle comme pouvant fonctionner avec l'équipement mobile dans lequel il est inséré.

Le module d'abonné peut contenir des informations confidentielles tels qu'un numéro de compte bancaire ou un mot de passe. Une application fonctionnant sur l'équipement mobile sera en charge d'utiliser ces données personnelles afin de fournir le service attendu. Néanmoins, une application pourrait détourner ces données personnelles à d'autres fins que le dialogue avec le fournisseur d'application concerné. Il peut en résulter un préjudice important pour le propriétaire du module d'abonné.

Ces applications exécutées dans l'équipement mobile utilisent des ressources disponibles dans le module d'abonné. Par ressources, on entend diverses fonctions et données nécessaires au bon fonctionnement d'une application. Certaines de ces ressources peuvent être communes à plusieurs applications, notamment les fonctions liées à la sécurité. Le module d'abonné peut ainsi bloquer ou plutôt rendre inutilisables certaines applications dont les paramètres de sécurité ou les droits de l'utilisateur sont insuffisants.

Le but de la présente invention est de proposer une méthode d'authentification de ou des applications dans un équipement mobile tant lors de leur téléchargement que lors de leur exécution.

Un autre but est de protéger l'utilisateur de l'équipement mobile ainsi que les fournisseurs d'applications concernés contre les abus résultants de l'usage d'applications non autorisées.

Ces buts sont atteints par une méthode d'authentification d'au moins une application fonctionnant dans un appareil connecté par un réseau à un serveur de contrôle, cet appareil étant localement connecté à un module de sécurité, ladite application est chargée et/ou exécutée au moyen d'un environnement d'exécution d'applications de l'appareil et utilise des ressources stockées dans le module de sécurité, cette méthode est caractérisée en ce qu'elle comprend les étapes suivantes:
- identification de l'appareil et du module de sécurité par le serveur de contrôle en vue du chargement et/ou de l'exécution d'une application,
- analyse et vérification par le serveur de contrôle desdites données,
- préparation d'un cryptogramme comprenant l'identification du module de sécurité et une empreinte de l'application,
- transmission dudit cryptogramme, via le réseau et l'appareil, par le serveur de contrôle vers le module de sécurité,
- extraction de l'empreinte, incluse dans le cryptogramme par le module de sécu rité,
- lors de l'initialisation d'une application, détermination de l'empreinte de ladite application et comparaison de cette empreinte avec l'empreinte stockée dans le module de sécurité,
- libération, respectivement blocage, de l'accès à certaines ressources du module de sécurité en fonction du résultat de la vérification de l'empreinte propre à cette application.

Cette méthode s'applique de préférence à la téléphonie mobile. Par conséquent, l'appareil est un équipement mobile téléphonique et le module de sécurité un module d'abonné ou carte SIM. Cet ensemble se connecte à un réseau mobile du type GSM (Global System for Mobile communications), GPRS (General Packet Radio Service), UMTS (Universal Mobile Télécommunications System), WLAN (Wireless Local Area Network) ou autre, géré par un serveur de contrôle d'un opérateur. Des applications logicielles sont installées dans l'équipement mobile et configurées de manière à utiliser des ressources (données ou fonctions) présentes dans le module d'abonné. Elles ne peuvent donc être utilisées dans leur intégralité seulement si les conditions de sécurités sont satisfaites selon des critères préétablis par l'opérateur ou le fournisseur d'applications. Ces critères sont, pour des raisons de sécurité, vérifiables dans le module de sécurité et vont définir les règles d'accès aux ressources du module d'abonné pour chaque application. Les critères peuvent se référer, par exemple, à la période de mise à jour des règles d'accès, au nombre de connexions au réseau, la technologie utilisée pour l'accès au réseau, l'identité du réseau d'accès utilisé, et à différents risques associés au matériel ou aux logiciels utilisés que l'opérateur désire prendre en compte.

Les ressources du module d'abonné sont bloquées ou libérées de manière ciblée, ceci dans le but de rendre certaines applications utilisables ou non. On ne bloque pas ou libère pas directement des applications de l'équipement mobile: on agit de manière indirecte sur les applications, c'est-à-dire que l'effet de blocage ou de libération va se manifester uniquement lorsque l'équipement mobile essaiera d'exécuter ces applications.

La méthode selon l'invention est basée sur le fait qu'à une application on associe un cryptogramme qui conditionne l'utilisation de l'application sur un équipement mobile connecté à un réseau.

Dans un premier mode de réalisation, le cryptogramme est transmis au module d'abonné pendant le chargement de l'application. Dans un second mode de réalisation, c'est l'application qui va chercher le cryptogramme sur le serveur de contrôle lors de sa première utilisation.

La méthode d'authentification selon l'invention s'applique également lors de l'exécution d'une application par l'équipement mobile, ce qui permet de s'assurer, à l'aide du module d'abonné, que cette application est autorisée à accéder certaines ressources (données ou fonctions) contenues dans ledit module d'abonné. En particulier, le module d'abonné peut vérifier régulièrement le cryptogramme attaché à une application au cours de l'exécution de ladite application.

Par exemple, l'insertion d'un module d'abonné d'un utilisateur dans un autre équipement mobile influencera le fonctionnement de certaines applications sans empêcher l'établissement de communications téléphoniques classiques. Cette barrière agit en quelque sorte comme un filtre visant à éliminer des équipements mobiles ou des appareils de simulation non autorisés ou encore des applications provenant de sources non agréées par l'opérateur.

Une modification de l'application par un tiers est également détectée par le module d'abonné qui refusera d'exécuter certaines commandes reçues entraînant ainsi le blocage ou des limitations de l'exécution de l'application.

Le serveur de contrôle joue donc un rôle essentiel en gérant les éléments de confiance ou de sécurité liés à l'ensemble équipement mobile/module d'abonné. Il interprète les données qui lui sont transmises par l'équipement mobile afin de contrôler ou limiter l'utilisation d'applications grâce aux ressources (données ou fonctions) stockées dans le module d'abonné.

La vérification du cryptogramme peut s'effectuer lors du premier démarrage ou lors de la première utilisation d'une application ou à chaque démarrage de celle-ci. Selon une variante, elle peut être exécutée périodiquement à un rythme donné selon des instructions provenant du serveur de contrôle.

Lors d'un chargement d'une application dans un équipement mobile, le cryptogramme attaché accompagnant l'application inclut en général une empreinte de l'application elle-même, c'est à dire un bloc de données calculé à partir du code de l'application à l'aide d'une fonction mathématique unidirectionnelle de hachage.

Lorsque le module d'abonné vérifie la validité du cryptogramme, il identifie aussi, de manière indirecte, l'équipement mobile et s'assure que les données viennent effectivement du serveur de contrôle. Autrement dit, par ce cryptogramme, le serveur de contrôle donne implicitement l'assurance au module d'abonné que l'identificateur de l'équipement mobile a été pris en compte, que le chargement de l'application a été contrôlé et que l'application est authentique. Selon des instructions préalablement reçues, le module d'abonné décidera d'autoriser ou de refuser des requêtes ou des commandes venant de l'application.

L'équipement mobile joue un rôle de relais dans cette étape de vérification en établissant un dialogue quasi direct entre le module d'abonné et le serveur de contrôle. Ainsi la sécurité des messages échangés est assurée de bout en bout entre le serveur de contrôle et le module d'abonné via l'environnement d'exécution des applications de l'équipement mobile. Celui-ci ne peut donc pas "tricher" ou transformer les données vis-à-vis du module d'abonné.

L'invention sera mieux comprise grâce à la description détaillée qui va suivre et qui se réfère aux figures annexées données à titre d'exemple nullement limitatif, à savoir:

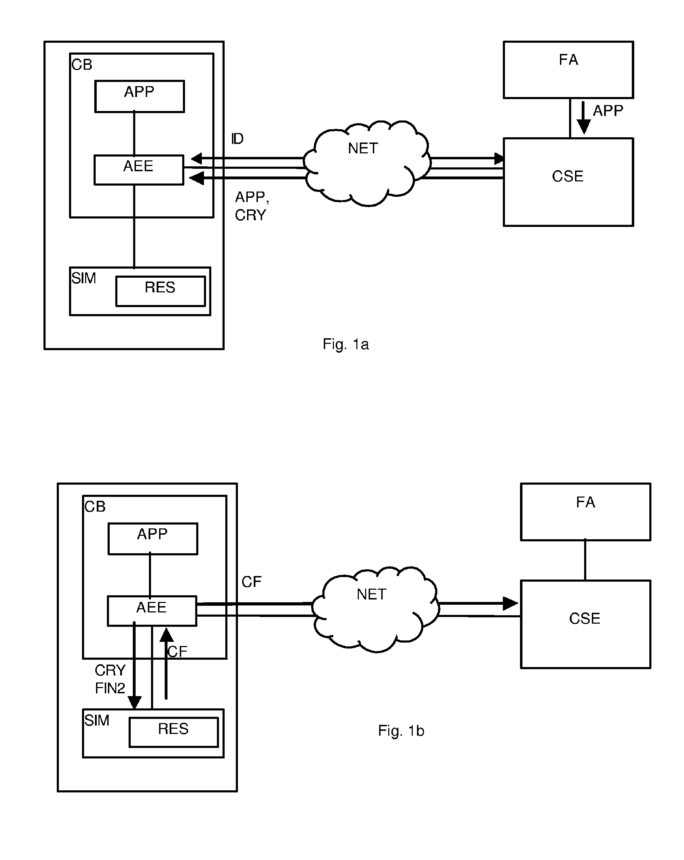

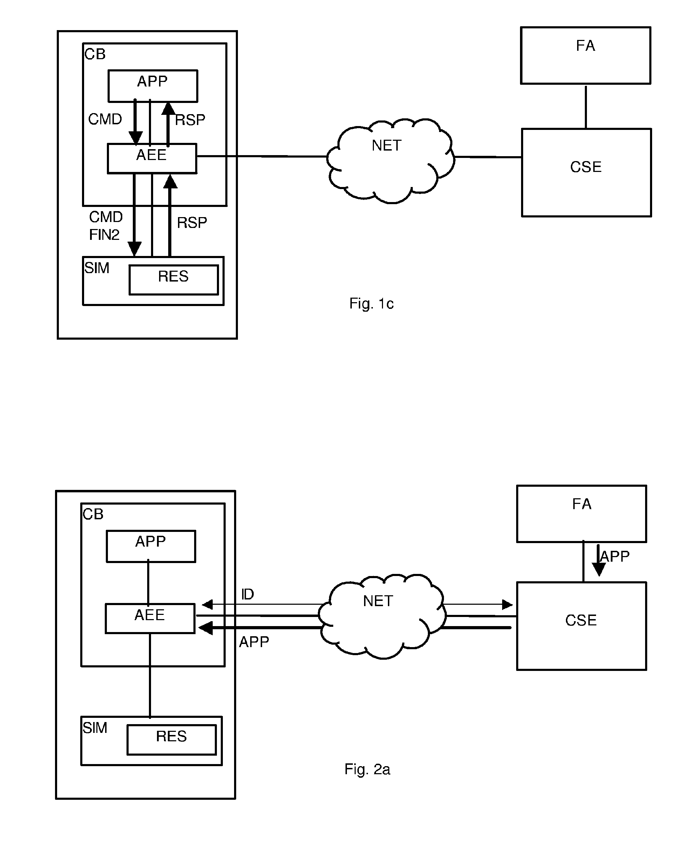

- La figure 1a illustre un schéma bloc montrant le processus d'installation d'une application selon un premier mode de réalisation où le cryptogramme est délivré via l'environnement d'exécution d'applications.
- La figure 1 b illustre le processus de vérification du cryptogramme selon le mode de la figure 1a.
- La figure 1 c illustre le processus de l'exécution de l'application utilisant les ressources du module d'abonné selon le mode de la figure 1a.
- La figure 2a illustre un schéma bloc montrant le processus d'installation d'une application selon un second mode où l'application seule est téléchargée.
- La figure 2b illustre le processus de vérification où l'application sollicite un cryptogramme auprès du serveur de contrôle selon le mode de la figure 2a.
- La figure 2c illustre le processus de l'exécution de l'application utilisant les ressources du module d'abonné selon le mode de la figure 2a.
- La figure 3a illustre un schéma bloc montrant le processus d'installation d'une application selon un troisième mode où l'application seule est téléchargée.
   La figure 3b illustre le processus de vérification où l'application sollicite un cryptogramme et une empreinte de l'application auprès du serveur de contrôle selon le mode de la figure 3a.
   La figure 3c illustre le processus de l'exécution de l'application utilisant les ressources du module d'abonné selon le mode de la figure 3a.
- La figure 4 illustre la structure d'un exemple de cryptogramme.

Les schémas blocs des figures 1 a, 1 b, 1 c, 2a, 2b, 2c, 3a, 3b, 3c montrent un ensemble équipement mobile (CB) module d'abonné (SIM) contenant des ressources (RES) relié via un réseau mobile (NET) à un serveur de contrôle (CSE) administré par un opérateur. Ce serveur est connecté à un ou plusieurs fournisseurs d'applications (FA).

L'équipement mobile (CB) inclut une ou plusieurs applications logicielles (APP) fonctionnant dans un environnement d'exécution (AEE). Ces applications proviennent, soit du fournisseur d'applications (FA) associé au serveur de contrôle (CSE) de l'opérateur, soit, elles peuvent être programmées d'origine par le fabricant de l'équipement mobile. Dans ce dernier cas, il est parfois nécessaire de télécharger des mises à jour qui sont également vérifiées par le module d'abonné (SIM).

Selon le premier mode de réalisation illustré par les figures 1 a, 1 b, 1 c, le cryptogramme (CRY) d'une application (APP) est délivré au module d'abonné (SIM) via l'environnement d'exécution d'applications (AEE) lors du processus d'installation de l'application (APP).

La figure 1a illustre le processus d'installation où l'équipement mobile (CB) transmet d'abord des données servant à l'identification (ID) du module d'abonné (SIM) que le serveur de contrôle (CSE) vérifie. Cette identification (ID) est effectuée à partir du numéro du module d'abonné (IMSI) et elle peut aussi tenir compte du numéro unique de l'équipement mobile (IMEI). Une application (APP) est ensuite téléchargée depuis le serveur (CSE) accompagnée d'un cryptogramme (CRY) qui sera transmis vers le module d'abonné (SIM) via l'environnement d'exécution (AEE) pour vérification comme illustré dans la figure 1 b.

Il est à noter que le fournisseur (FA) est considéré comme digne de confiance par l'opérateur, c'est-à-dire que les applications (APP) sont homologuées et fonctionnent sans causer un quelconque préjudice à l'utilisateur et/ou à l'opérateur.

La méthode selon l'invention s'applique à plusieurs formes d'applications (APP) exécutées dans différents types d'environnement d'exécution (AEE). Par exemple, de nombreux téléphones mobiles possèdent des fonctionnalités issues d'applications Java qui sont exécutées par une machine virtuelle (VM) Java servant de processeur et d'environnement. La description ci-après se base sur l'exemple d'applications Java. Bien entendu, d'autres environnements ou systèmes d'exploitations tels que Symbian OS, Windows, Palm OS, Linux embarqué etc. peuvent être utilisés comme support d'applications.

Lors de son exécution, voir figure 1 c, une application Java sollicite le module d'abonné (SIM), elle en informe l'environnement d'exécution (AEE) en lui adressant des requêtes ou commandes (CMD). L'environnement d'exécution (AEE) calcule l'empreinte (FIN2) de l'application et l'envoie au module d'abonné (SIM). Le cryptogramme (CRY) qui a été généré par le serveur de contrôle (CSE) puis chargé dans l'équipement mobile (CB) avec l'application (APP) (ou séparément), est stocké dans le module d'abonné (SIM). Ce dernier vérifie d'abord qu'il possède effectivement les données nécessaires lui permettant de décider s'il doit répondre à des requêtes ou commandes (CMD) de l'application (APP). Ces données, faisant office de droits chargés à partir du serveur de contrôle (CSE) lors du chargement de l'application (APP), permettent de contrôler le fonctionnement de l'application (APP). En cas d'absence de ces droits, l'application (APP) ne pourra utiliser les ressources (RES) (données ou fonctions) du module d'abonné (SIM).

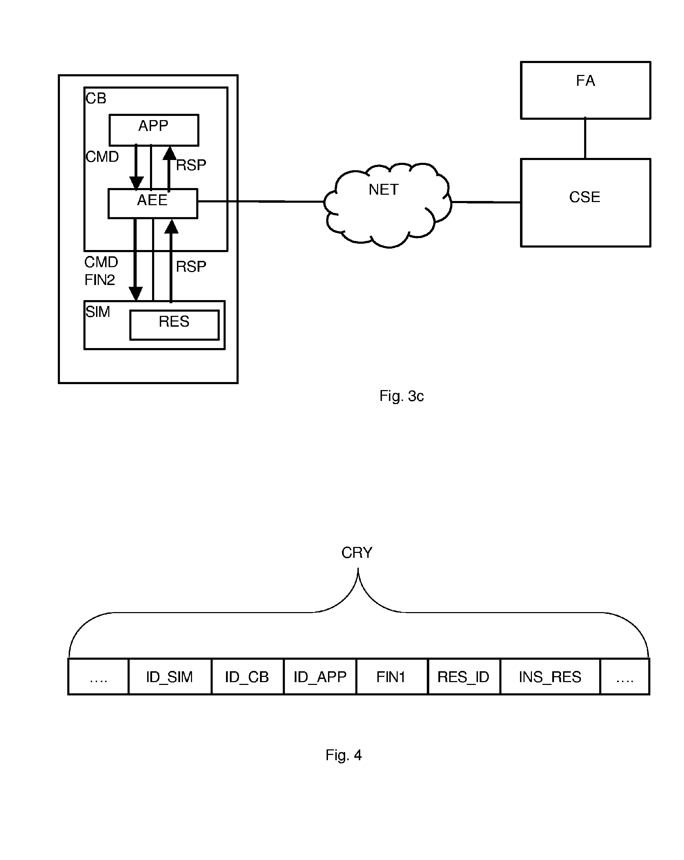

Dans le cas où ces droits sont présents, le module d'abonné (SIM) vérifie l'empreinte (FIN1 ) issue du cryptogramme (CRY) stocké en la comparant avec l'empreinte (FIN2) associée à l'application (APP) et fournie par l'environnement d'application (AEE). Ce cryptogramme (CRY) peut se constituer sous la forme d'un bloc encrypté par une clé privée du type RSA (Rivest, Shamir, Adelman). Ce bloc représenté par la figure 4 contient par exemple, entre autres données, l'identificateur du module d'abonné IMSI (ID_SIM), l'identificateur de l'équipement mobile IMEI (ID_CB), un identificateur de l'application (ID_APP), l'empreinte de l'application (FIN1), des identificateurs des ressources SIM (RES_ID) et des instructions de blocage/libération des ressources SIM (INS_RES). Cette clé privée ne serait connue que du serveur de contrôle (CSE), alors que sa partie publique serait connue du module d'abonné (SIM). L'avantage de l'utilisation de clés asymétriques réside en ce que la clé servant à créer des cryptogrammes ne se trouve pas à l'extérieur du serveur de contrôle (CSE).

Bien entendu, d'autres algorithmes à clés asymétriques tels que par exemple DSA (Digital Signature Algorithm), et ECC (Elliptic Curve Cryptography) peuvent constituer des alternatives à RSA

L'usage d'algorithme à clés symétriques peut être préféré pour des raisons de simplicité, de rapidité des vérifications ou de coûts de fabrication et de mise en oeuvre plus faibles. Dans ce cas, la clé serait connue du serveur (CSE) et du module d'abonné (SIM), par exemple un algorithme IDEA (International Data Encryption Algorithm) pourrait être utilisé pour signer le bloc (IMSI, IMEI, identificateur de l'application, empreinte de l'application, identificateurs des ressources SIM, instructions de blocage/libération des ressources SIM). Comme alternative à l'algorithme IDEA, des algorithmes tels que, par exemple, TDES (Triple Data Encryption Standard) et AES (Advanced Encryption Standard) peuvent aussi être utilisés.

Dans ces deux variantes à clés asymétriques et symétriques, le module d'abonné (SIM) vérifie la concordance des différents champs apparaissant dans le cryptogramme (CRY), notamment il contrôle les identificateurs d'applications (ID_APP) et les empreintes d'applications (FIN1) qui sont autorisées ou non à utiliser ses ressources (RES) (données ou fonctions).

Dans une variante, le cryptogramme (CRY) peut inclure un compteur servant à empêcher le double usage d'un même cryptogramme adressé au module d'abonné (SIM) (replay attack). En effet deux applications du même type peuvent porter le même identificateur et avoir la même empreinte (FIN1). Dans ce cas, le module d'abonné (SIM) contrôlera aussi la valeur de ce compteur par comparaison avec celle d'un compteur de référence stocké et régulièrement mis à jour.

Une variante au compteur est d'utiliser un aléa (nombre aléatoire) généré par le module d'abonné (SIM). Cet aléa est transmis avec les données envoyées au serveur de contrôle (CSE). Ce dernier renvoie cet aléa dans le message de réponse et le module d'abonné peut vérifier qu'il s'agit bien d'un nouveau message. Plus généralement, afin d'éviter tout risque d'usage d'un ancien cryptogramme (CRY), cette dernière comprend une variable prédictive par le module d'abonné (SIM), soit un compteur ou un aléa.

Dans une autre variante le cryptogramme (CRY) généré à l'aide d'une clé du type RSA ou IDEA peut être remplacée par un bloc généré avec une clé partagée HMAC (Keyed-Hashing for Message Authentication) à partir de l'ensemble (IMSI, IMEI, identificateur de l'application, empreinte de l'application, identificateurs des ressources SIM, instructions de blocage/libération des ressources SIM). HMAC est un mécanisme pour l'authentification de messages par l'utilisation de fonctions de hachage cryptographiques telles que MD5 (Message Digest) ou SHA-1 (Secure Hash Algorithm), en combinaison avec une clé partagée.

Cette clé présente à à fois dans le serveur de contrôle (CSE) et dans le module d'abonné (SIM) peut être chargée lors de la personnalisation du module d'abonné (SIM) ou lors de l'installation de certaines ressources (RES) dans le module d'abonné (SIM). Selon les options, à chaque ressource (RES) ou groupe de ressources du module d'abonné (SIM) peut être associée une clé différente, ou bien, la clé peut être globale pour l'ensemble des ressources (RES) et unique pour un module d'abonné (SIM) donné.

Le cryptogramme (CRY) permet ainsi au module d'abonné (SIM) de connaître la ou les ressources (RES) pouvant être libérées ou bloquées dans le module d'abonné (SIM) pour l'équipement mobile (CB) correspondant.

Les deux empreintes utilisées (FIN1, respectivement FIN2) sont des éléments déterminants car elles constituent un moyen de contrôle cryptographique de l'application (APP) par l'équipement mobile (CB) et par le module d'abonné (SIM). Un tel contrôle est nécessaire afin d'empêcher qu'une application tierce s'authentifie avec un cryptogramme (CRY) donné. En effet, si le cryptogramme A authentifie l'application A auprès du module d'abonné A dans un équipement mobile A, il faut éviter qu'une autre application B s'authentifie indûment avec ce même cryptogramme A auprès du module d'abonné A dans l'équipement mobile A.

Selon une variante, l'empreinte de l'application (FIN1) incluse dans le cryptogramme (CRY) reste confidentielle de bout en bout entre le serveur de contrôle (CSE) et le module d'abonné (SIM). Pour ce faire l'empreinte (FIN1) est encryptée par le serveur de contrôle (CSE) et décryptée par le module d'abonné (SIM). De plus, l'application (APP) peut être personnalisée pour un chargement donné de manière à ce que l'empreinte (FIN1) incluse dans le cryptogramme (CRY) et l'empreinte (FIN2) de l'application (APP) calculée par l'environnement d'exécution (AEE) restent identiques mais dépendent de l'identité de l'équipement mobile (CB). Une telle mesure est nécessaire si l'on désire empêcher qu'une application tierce s'authentifie avec une empreinte donnée dans un autre environnement d'exécution d'applications (AEE) dont l'interface avec le module d'abonné (SIM) serait compromise. En effet, si l'empreinte A authentifie l'application A auprès du module d'abonné A dans un équipement mobile A, il faut éviter qu'une autre application B s'authentifie indûment avec cette même empreinte A auprès du module d'abonné B dans l'équipement mobile B.

Selon une autre variante, chaque application (du type Java) est accompagnée de deux cryptogrammes: un cryptogramme Java destiné à la machine virtuelle (VM) et un cryptogramme (CRY) destiné au module d'abonné (SIM). Ces deux cryptogrammes comprennent entre autre la même empreinte d'application (ici appelée FIN2) qui est celle du code de l'application Java. Ainsi, lorsque le module d'abonné (SIM) doit vérifier le cryptogramme (CRY) d'une application, il attend de la machine virtuelle (VM) l'empreinte (FIN2) associée à l'application (APP) en question qu'elle aura forcément calculée auparavant. L'empreinte de l'application est transmise par l'équipement mobile (CB) au module d'abonné (SIM). Cette empreinte ne provient pas du serveur de contrôle, elle est calculée par l'environnement d'exécution d'applications (AEE) de l'équipement mobile (CB) après le téléchargement de l'application (APP). Par contre, l'équipement mobile (CB) transmet le cryptogramme (CRY) préalablement chargé en sus de l'application depuis le serveur de contrôle au module d'abonné. Ainsi, ce dernier peut vérifier l'empreinte reçue par comparaison. L'équipement mobile (CB) ne peut pas tricher tant qu'il ne connaît pas l'empreinte attendue par le module d'abonné (SIM); le cas échéant, cela nécessiterait de rendre la fonction de calcul de l'empreinte, habituellement une fonction de hachage, réversible ou de trouver une autre empreinte donnant le même cryptogramme (CRY) ce qui est quasiment impossible.

La figure 1 b montre le processus de vérification du cryptogramme (CRY) qui peut s'effectuer soit régulièrement, par exemple avant chaque sollicitation de l'application (APP) concernée, soit, de préférence, une seule fois avant son installation ou avant sa première utilisation. Si le cryptogramme (CRY) est valide, le module d'abonné (SIM) transmet un message d'acceptation (OK) à l'environnement d'exécution (AEE). L'application (APP) peut alors adresser ses requêtes ou commandes (CMD) au module d'abonné (SIM) via l'environnement d'exécution (AEE) et utiliser les ressources (RES) du module d'abonné (SIM). Ce dernier accepte les commandes (CMD) en transmettant les réponses (RSP) adéquates à l'application (APP) via l'environnement d'exécution (AEE), voir figure 1 c.

Dans le cas d'un cryptogramme (CRY) non valide, le module d'abonné (SIM) transmet un message de refus (NOK) à l'environnement d'exécution (AEE). Dans un tel cas l'environnement d'exécution (AEE) peut soit annuler le processus d'installation de l'application (APP), soit l'application (APP) est installée et ses requêtes ou ses commandes (CMD) adressées au module d'abonné (SIM) via l'environnement d'exécution (AEE) resteront sans réponse (RSP) et les ressources (RES) du module d'abonné (SIM) ne pourront être utilisées.

Dans les deux cas d'acceptation et de refus (OK et NOK) l'environnement d'exécution d'application (AEE) peut relayer la réponse au serveur de contrôle (CSE). Le module d'abonné peut ainsi indirectement renvoyer une confirmation (CF) de réception du cryptogramme (CRY) au serveur de contrôle (CSE) et permettre un contrôle de bout en bout de l'opération, voir figure 1 b. La confirmation (CF) comprend au moins un code de succès ou d'erreur de l'opération ainsi qu'un compteur servant à la protection contre des attaques par répétition. Ce message permet aussi au serveur de contrôle (CSE) de tenir à jour le compteur associé au module d'abonné (SIM).

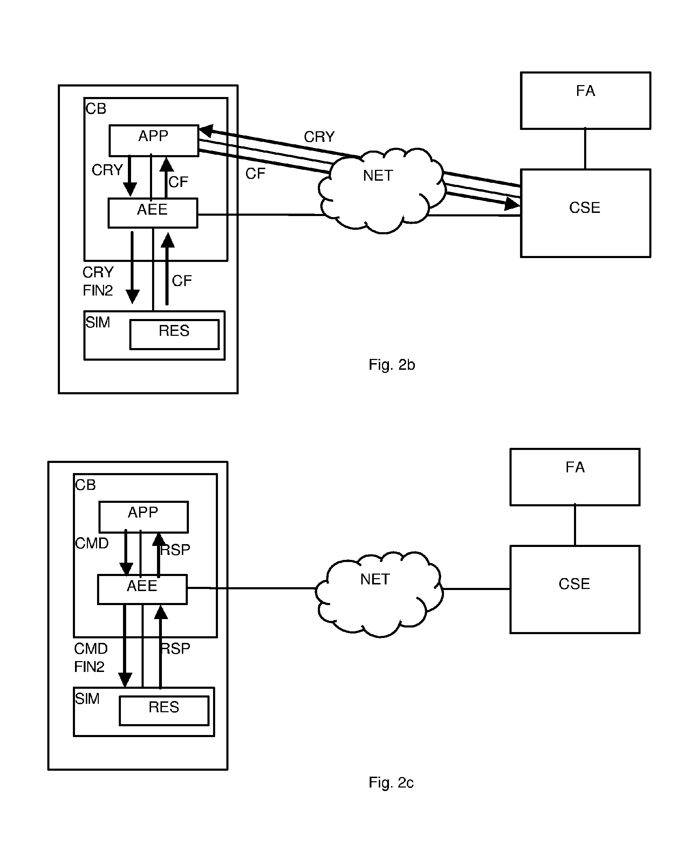

Selon le second mode de réalisation illustré par les figures 2a, 2b, 2c, l'application (APP) est téléchargée seule, après identification (ID) de l'équipement mobile (CB), sans cryptogramme (CRY), voir figure 2a.

Lors du processus de vérification, figure 2b, l'application (APP) sollicite, lors de son lancement par l'utilisateur, un cryptogramme (CRY) comprenant les droits d'utilisation de ressources (RES) pour ladite application. Ce cryptogramme (CRY) est téléchargé, depuis le serveur (CSE) de contrôle, directement par l'application (APP) qui le transmet au module d'abonné (SIM) via l'environnement d'exécution (AEE). Le module d'abonné (SIM) transmet une confirmation (CF) de réception du cryptogramme (CRY) au serveur (CSE), par le biais de l'application (APP) et non par le biais de l'environnement d'exécution (AEE) comme dans le cas du premier mode de réalisation. Dans ce mode, l'environnement d'exécution (AEE) ne joue qu'un rôle de relais entre l'application (APP) et le module d'abonné (SIM).

Le processus d'exécution de l'application (APP) après vérification du cryptogramme (CRY), voir figure 2c, se déroule de la même manière que dans le premier mode illustré par la figure 1 c et décrit plus haut.

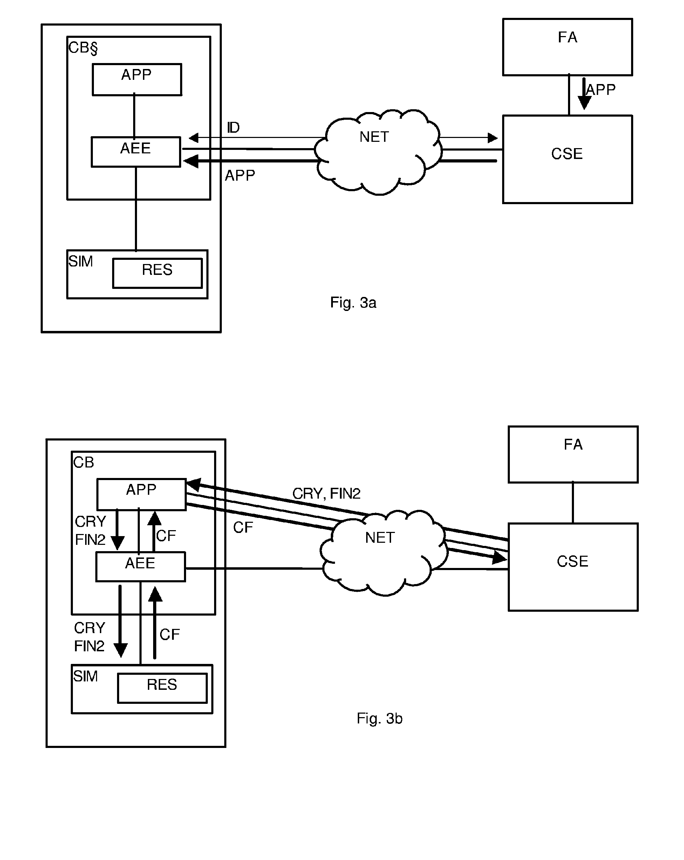

Les figures 3a, 3b, 3c montrent une troisième variante où l'application APP est téléchargée seule, après identification (ID) de l'équipement mobile (CB), depuis le serveur de contrôle (CSE) ou depuis un serveur intermédiaire de téléchargement d'applications (APP) voir figure 3a. Lors du processus de vérification (figure 3b), l'application charge le cryptogramme (CRY) et l'empreinte (FIN2) directement à partir du serveur (CSE) ou depuis un serveur intermédiaire de téléchargement d'applications (APP). Dans ce cas, à la différence des deux variantes précédentes, l'environnement d'application (AEE) ne calcule plus l'empreinte (FIN2) qui est calculée par une unité externe soit par le serveur de contrôle CSE, soit par un serveur intermédiaire de téléchargement d'applications (APP).

Le processus d'exécution de l'application (APP) après vérification du cryptogramme (CRY), voir figure 3c, se déroule de la même manière que dans les deux modes précédents illustrés par les figures 1 c et 2c.

Ce troisième mode de réalisation peut être préféré car son avantage est de ne demander aucune modification de l'environnement d'exécution (AEE) tel qu'il est défini actuellement pour les applications Java installées dans les téléphones mobiles, c'est-à-dire qu'une modification des normes existantes n'est pas nécessaire.

De plus, la contrainte de la première variante voulant que les deux cryptogrammes utilisent la même empreinte tombe étant donné que les processus de vérification du cryptogramme (CRY) et celui de l'installation de l'application sont totalement indépendants.

Afin de personnaliser les empreintes calculées sur les applications, une possibilité consiste à ajouter au code de l'application, avant son chargement dans l'équipement mobile, une donnée différente pour chaque équipement mobile. Ainsi, lorsque l'empreinte est calculée par l'environnement d'application de l'équipement mobile, cette empreinte est unique et ne peut servir à un autre équipement mobile. Le cryptogramme va bien entendu être calculé par le serveur de contrôle sur la base des données d'origine de l'application et de cette donnée unique.

Dans une variante de l'invention, l'équipement mobile peut être remplacé par un appareil non mobile tel qu'un décodeur de télévision à péage ou un ordinateur. Des applications peuvent être téléchargées dans l'appareil à partir d'un serveur via un réseau de télécommunications. Un cryptogramme associé à l'application est stocké dans le module de sécurité et vérifié lors de la mise en service ou lors de chaque démarrage d'une application. Le résultat de cette vérification conditionne le fonctionnement de l'application en libérant ou en bloquant des ressources dans le module de sécurité.

## Revendications

1. Méthode d'authentification d'au moins une application (APP) fonctionnant dans un appareil connecté par un réseau (NET) à un serveur de contrôle (CSE), cet appareil étant localement connecté à un module de sécurité (SIM), ladite application (APP) est chargée et/ou exécutée au moyen d'un environnement d'exécution d'applications (AEE) de l'appareil et utilise des ressources (RES) stockées dans le module de sécurité (SIM), cette méthode est **caractérisée en ce qu'**elle comprend les étapes suivantes:
- identification de l'appareil et du module de sécurité (SIM) par le serveur de contrôle (CSE) en vue du chargement et/ou de l'exécution d'une application (APP),
- analyse et vérification par le serveur de contrôle (CSE) desdites données,
- préparation d'un cryptogramme (CRY) comprenant une empreinte de l'application (APP),
- transmission dudit cryptogramme (CRY), via le réseau et l'appareil, par le serveur de contrôle (CSE) vers le module de sécurité (SIM),
- extraction de l'empreinte (FIN1), incluse dans le cryptogramme (CRY) par le module de sécurité (SIM),
- lors de l'initialisation d'une application (APP), détermination de l'empreinte (FIN2) de ladite application (APP) et comparaison de cette empreinte (FIN2) avec l'empreinte (FIN1) stockée dans le module de sécurité (SIM),
- libération, respectivement blocage, de l'accès à certaines ressources (RES) du module de sécurité (SIM) en fonction du résultat de la vérification propre à cette application (APP).

2. Méthode selon la revendication 1 **caractérisée en ce que** l'appareil est un équipement mobile (CB) de téléphonie mobile.

3. Méthode selon les revendications 1 et 2 **caractérisée en ce que** le réseau (NET) est un réseau mobile du type GSM ou GPRS ou UMTS ou WLAN.

4. Méthode selon les revendications 1 à 3, **caractérisée en ce que** le module de sécurité (SIM) est un module d'abonné inséré dans l'équipement mobile (CB) de téléphonie mobile de type carte SIM.

5. Méthode selon les revendications 1 à 4 **caractérisée en ce que** l'identification (ID) du module de sécurité (SIM) est effectuée à partir d'un numéro identifiant ledit module de sécurité (SIM) propre à un abonné au réseau mobile (NET) et à partir d'un numéro identifiant de manière unique l'équipement mobile (CB).

6. Méthode selon la revendication 1 **caractérisée en ce que** le cryptogramme (CRY) reçu par le module de sécurité (SIM) conditionne l'utilisation des applications (APP) selon des critères préétablis par l'opérateur ou le fournisseur d'applications (FA).

7. Méthode selon la revendication 6 **caractérisée en ce que** les critères définissent des limites d'utilisation d'une application (APP) selon des risques associés au logiciel de ladite application (APP) ou au matériel de l'équipement mobile (CB) que l'opérateur désire prendre en compte.

8. Méthode selon les revendications 1 à 7 **caractérisée en ce que** la vérification du cryptogramme (CRY) s'effectue lors du premier démarrage ou lors de la première utilisation d'une application (APP).

9. Méthode selon les revendications 1 à 7 **caractérisée en ce que** la vérification du cryptogramme (CRY) s'effectue périodiquement à un rythme donné selon des instructions provenant du serveur de contrôle (CSE).

10. Méthode selon les revendications 1 à 7 **caractérisée en ce que** la vérification du cryptogramme (CRY) s'effectue lors de chaque démarrage d'une application (APP) sur l'équipement mobile (CB).

11. Méthode selon les revendications 1 à 10 **caractérisée en ce que** le cryptogramme (CRY) est généré à l'aide d'une clé d'encryption asymétrique ou symétrique à partir d'un ensemble de données contenant, entre autres données, le numéro d'identification unique de l'équipement mobile (CB), le numéro d'identification du module d'abonné (SIM), un identificateur de l'application (APP), l'empreinte (FIN1) de l'application (APP) calculée avec une fonction unidirectionnelle de hachage et des identificateurs des ressources SIM (RES_ID) et des instructions de blocage/libération des ressources SIM (INS_RES).

12. Méthode selon la revendication 11 **caractérisée en ce que** le cryptogramme (CRY) comprend une variable prédictive par le module d'abonné (SIM) évitant le double usage d'un même cryptogramme (CRY), la valeur de ladite variable étant contrôlée par le module d'abonné (SIM) par comparaison avec celle d'une valeur de référence stockée dans ledit module et régulièrement mise à jour.

13. Méthode selon les revendications 1 à 12 **caractérisée en ce que** le module d'abonné (SIM) transmet au serveur de contrôle (CSE), via l'équipement mobile (CB) et le réseau mobile (NET), un message de confirmation (CF) lorsque ledit module d'abonné (SIM) a accepté ou refusé un cryptogramme (CRY) d'une application (APP).

14. Méthode selon les revendication 1 à 13 **caractérisée en ce que** le cryptogramme (CRY) est transmis au module de sécurité (SIM) en même temps que l'application (APP) est chargée dans l'appareil (CB) via l'environnement d'exécution des applications (AEE).

15. Méthode selon la revendication 1 à 13 **caractérisée en ce que** l'application (APP), une fois chargée dans l'équipement mobile (CB) depuis le serveur (CSE) de contrôle via le réseau (NET), sollicite un cryptogramme (CRY) au serveur (CSE) lors de son initialisation et transmet ledit cryptogramme (CRY) au module de sécurité (SIM), le message de confirmation (CF) d'acceptation ou de refus du cryptogramme (CRY) étant transmis par le module de sécurité (SIM) au serveur via l'application (APP).

16. Méthode selon la revendication 1, **caractérisée en ce que** l'appareil est un décodeur de télévision à péage ou un ordinateur auquel est connecté le module de sécu rité.

17. Module de sécurité comprenant des ressources (RES) destinées à être localement accédées par une application (APP) exécutée sur un appareil (CB) relié à un réseau (NET), ce module comprenant des moyens de stockage du cryptogramme (CRY) et de l'empreinte (FIN1) de ladite application (APP) et des moyens de transmission d'un message de confirmation (CF) d'acceptation ou de refus du cryptogramme (CRY), **caractérisé en ce qu'**il comprend des moyens de vérification du cryptogramme (CRY) et de l'empreinte (FIN1) stockés permettant de libérer ou de bloquer certaines ressources (RES) selon le résultat de la vérification.

18. Module de sécurité selon la revendication 17, **caractérisé en ce qu'**il est du type "module d'abonné" ou "carte SIM" destiné à être relié à un équipement mobile.
